Europäisches Patentamt

European Patent Office

Office européen des brevets

(19)

(11) Veröffentlichungsnummer: **0 068 253**
A2

(12) # EUROPÄISCHE PATENTANMELDUNG

(21) Anmeldenummer: **82105160.4**

(22) Anmeldetag: **14.06.82**

(51) Int. Cl.³: **B 23 Q 5/04**

(30) Priorität: **15.06.81 DE 3123639**

(43) Veröffentlichungstag der Anmeldung: **05.01.83**
**Patentblatt 83/1**

(84) Benannte Vertragsstaaten: **AT CH FR GB IT LI**

(71) Anmelder: **EMAG MASCHINENFABRIK GMBH,
Austrasse 24, D-7335 Salach/Württemberg (DE)**

(72) Erfinder: **Hessbrüggen, Norbert, Sudetenstrasse 47/2,
D-7321 Eschenbach (DE)**

(74) Vertreter: **Zmyj, Erwin, Dipl.-Ing., Postfach 95 04 28,
D-8000 München 95 (DE)**

(54) **Antriebsvorrichtung für die Hauptspindel einer Drehmaschine.**

(57) Am hinteren Ende eines Spindelkastens (1) einer Drehmaschine (2) ist ein Getriebe (6) an einer Zentrierung (7) der Drehmaschine auswechselbar ansetzbar, wobei das getriebeseitige Zahnrad mit dem Antriebsrad (4) auf der Hohlspindel (3) unmittelbar in Eingriff steht.

Antriebsvorrichtung für die Hauptspindel einer
Drehmaschine

Die Erfindung bezieht sich auf eine Antriebsvorrichtung für die Hauptspindel einer Drehmaschine, wobei die Hauptspindel als Hohlspindel ausgebildet ist, an deren vorderen Ende ein Spannfutter vorgesehen ist und an deren hinteren, aus dem Spindelkasten herausragenden Ende eine Spanneinrichtung für das Spannfutter angeordnet ist, und wobei zwischen einer außerhalb der Drehmaschine vorgesehenen Antriebsvorrichtung und der Hohlspindel eine Antriebsübertragungseinrichtung vorgesehen ist, die mit einem auf der Hohlspindel sitzenden Antriebsrad in Antriebsverbindung steht und außen an der Drehmaschine austauschbar angeordnet ist.

Bei einer bekannten Antriebsvorrichtung dieser Art (Zeitschrift für wirtschaftliche Fertigung, 1969, Heft 2, Seiten 65 bis 69, insbesondere Bild 6) ist zwar eine lösbare Befestigung des Getriebes an der Drehmaschine vorgesehen, wodurch es möglich ist dieses Getriebe nötigenfalls gegen ein anderes Getriebe auszutauschen, wenn sich das Anwendungsgebiet für das die Maschine vorgesehen ist, geändert hat oder die Entscheidung über die entsprechende Antriebsvorrichtung bis kurz vor Fertigstellung der Maschine offenzulassen. Nachteilig bei dieser bekannten Antriebsvorrichtung ist jedoch, die Tatsache, daß zwischen dem Getriebe und dem Antriebsrad auf der Hohlspindel ein Riementrieb vorgesehen ist, der das übertragbare Drehmoment begrenzt. Dieser Nachteil tritt auch bei anderen bekannten Antriebsvorrichtungen auf (Zeitschrift "Werkstatt und Betrieb", 1976, Heft 2, Seiten 57 bis 66). Bei diesen zuletzt erwähnten bekannten Antriebsvorrichtungen ist das Getriebe als Standgetriebe neben den Drehmaschinen angeordnet, wobei die Antriebsübertragung vom Getriebe zum Antriebsrad auf der Drehspindel ebenfalls durch einen Riementrieb erfolgt.

Aufgabe der Erfindung ist es, eine Antriebsvorrichtung der im Oberbegriff des Anspruchs 1 angegebenen Art so auszugestalten, daß bei einer auswechselbaren Anordnung des Getriebes eine Drehmomentbegrenzung in der Antriebsübertragungsvorrichtung vermieden wird.

Diese Aufgabe wird ausgehend von einer Antriebsvorrichtung der eingangs erläuterten Art erfindungsgemäß dadurch gelöst, daß die Antriebsübertragungseinrichtung als Zahnradgetriebe ausgebildet ist, dessen Getriebegehäuse an einer am Spindelkasten angeordneten Zentrierung in Bezug auf die Hohlspindel und das auf ihr austauschbar angeordnete Antriebsrad zentriert ist, mit dem ein getriebeseitiges Zahnrad kämmt.

Nach der vorliegenden Erfindung ist das Getriebe nicht nur austauschbar an dem . Spindelkasten angebracht, sondern es ist so an den Spindelkasten ansetzbar, daß das letzte Zahnrad des Getriebes unmittelbar mit dem Antriebsrad auf der Hohlspindel in Eingriff kommen kann. Durch die Zentrierung am Spindelkasten ist es möglich ein Getriebe gegen ein anderes auszutauschen, ohne daß ein Riementrieb vorgesehen sein müßte, welcher eine Begrenzung des zu übertragenden Drehmomentes systembedingt herbeiführt. Durch die Zentrierung in Bezug auf die Hohlspindel und das austauschbar angeordnete Antriebsrad ist nicht nur ein problemloser Austausch eines Getriebes gegen ein anderes Getriebe möglich, sondern der zusätzliche Vorteil besteht darin, daß trotz der Austauschbarkeit des Getriebes der Riementrieb entfallen kann, wodurch wesentlich höhere Drehmomente auf die als Hohlspindel ausgebildete Hauptspindel übertragen werden können.

Da das Antriebsrad auf der Hohlspindel austauschbar angeordnet ist, ist es in einfacher Weise möglich nicht nur ein Getriebe gegen ein anderes Getriebe auszutauschen, sondern gegebenenfalls das Getriebe durch einen einfachen Riementrieb zu ersetzen.

Unter dem Ausdruck Getriebe soll jede Art von Zahnradgetriebe erfaßt sein und zwar unabhängig davon, ob es sich um ein schaltbares oder ein Getriebe mit fest vorgegebenen Übersetzungsverhältnis handelt.

Die Erfindung ist in der Zeichnung beispielsweise dargestellt.

Fig. 1    zeigt einen schematischen Teilschnitt durch ein am Spindelkasten an einer Drehmaschine angeflanschtes Getriebe mit Antriebsmotor und

Fig. 2    stellt einen Riementrieb an Stelle des Getriebes nach Fig. 1 dar.

Wie aus der Zeichnung ersichtlich, ragt am hinteren Ende des Spindelkastens 1 einer Drehmaschine 2 eine Hohlspindel 3 heraus, die die Hauptspindel der Drehmaschine bildet und auf der ein Antriebsrad 4 angeordnet ist, welches als Zahnrad ausgebildet ist und mit einem entsprechenden Zahnrad eines an der Rückseite 5 des Spindelkastens ansetzbaren Getriebes in Antriebsverbindung steht.

Das Getriebe 6 ist als Flanschgetriebe ausgebildet und mittels eines Flansches 8 auf eine am Spindelkasten vorgesehene Zentrierung 7 aufsetzbar und dort mittels Schrauben in üblicher Weise befestigbar.

Für den Fall, daß das Getriebe eine größere Abmessung und damit ein größeres Gewicht aufweist ist ein Stützlager 9 am rückseitigen Ende der Drehmaschine vorgesehen, das zur Aufnahme des Endes des Getriebes dient. Eine Getriebeeingangswelle 14 des Getriebes steht über eine Kupplung 13 mit einem Antriebsmotor in Antriebsverbindung.

Die Hohlspindel 3 greift durch das Getriebe 6 hindurch, wofür eine entsprechend abgedichtete Öffnung 10 vorgesehen ist, und steht mit einer durch die Hohlspindel 3 hindurchgreifenden Spannvorrichtung 11 für ein in der Zeichnung nicht dargestelltes Spannfutter in Verbindung.

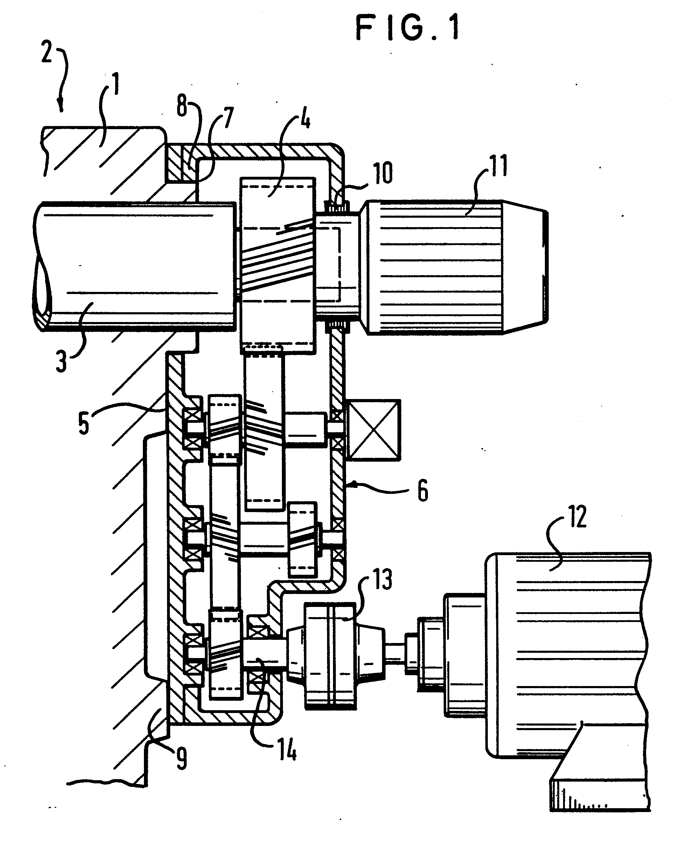

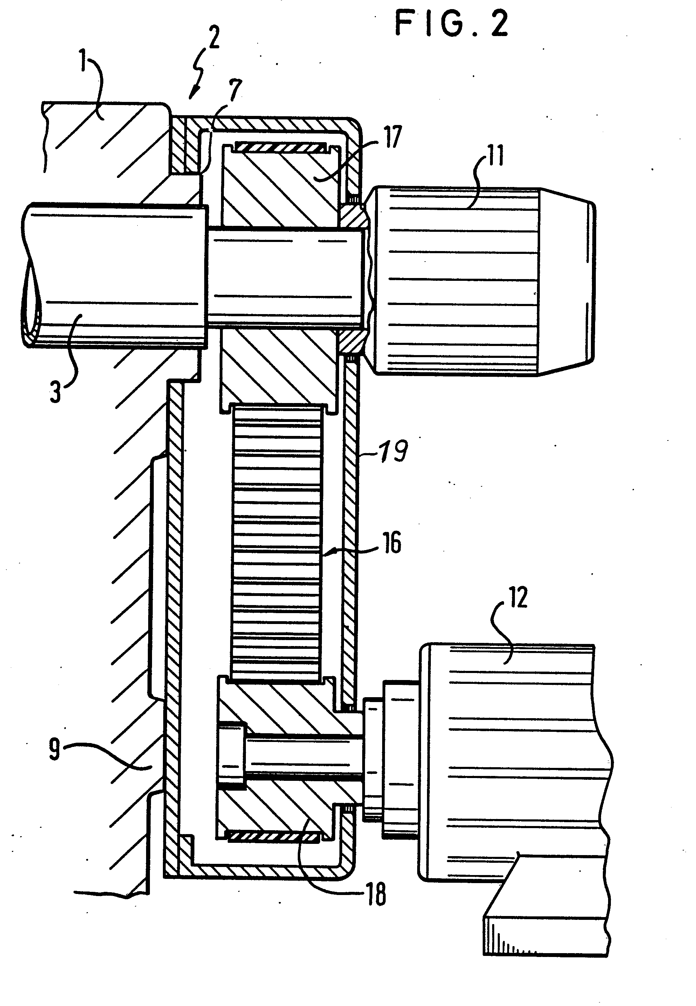

In Fig. 2 ist das hintere Ende des Spindelkastens mit der herausragenden Hohlspindel 3 dargestellt, die an Stelle des Zahnrades 4 gemäß Fig. 1 ein für einen Riementrieb 16 geeignetes Antriebsrad 17 trägt, wobei an Stelle der Kupplung 13 auf der Antriebswelle des Antriebsmotors 12 ebenfalls ein entsprechendes Antriebsrad 18 für den Antriebsriemen 16 vorgesehen ist. Die üblicherweise für das Getriebegehäuse vorgesehene

---

Zentrierung dient im Falle der Anordnung eines Riementriebs für die Aufnahme- und Befestigung einer Verkleidung 19, die nicht nur als Sicherheitsvorkehrung sondern auch gleichzeitig als Schalldämpfung dient.

Patentanspruch

Antriebsvorrichtung für die Hauptspindel einer Drehmaschine, wobei die Hauptspindel als Hohlspindel ausgebildet ist, an deren vorderem Ende ein Spannfutter vorgesehen ist und an deren hinteren, aus dem Spindelkasten herausragenden Ende eine Spanneinrichtung für das Spannfutter angeordnet ist, und wobei zwischen einer außerhalb der Drehmaschine vorgesehenen Antriebsvorrichtung und der Hohlspindel eine Antriebsübertragungseinrichtung vorgesehen ist, die mit einem auf der Hohlspindel sitzenden Antriebsrad in Antriebsverbindung steht und außen an der Drehmaschine austauschbar angeordnet ist, dadurch g e k e n n z e i c h n e t ,  daß die Antriebsübertragungseinrichtung als Zahnradgetriebe (6) ausgebildet ist, dessen Getriebegehäuse an einer am Spindelkasten (1) angeordneten Zentrierung (7) in Bezug auf die Hohlspindel (3) und das auf ihr austauschbar angeordnete Antriebsrad (4) zentriert ist, mit dem ein getriebeseitiges Zahnrad kämmt.

# FIG. 1

# FIG. 2